# EUROPÄISCHE PATENTANMELDUNG

(11) **EP 4 470 907 A1**
(43) Veröffentlichungstag der Anmeldung: **04.12.2024**
(21) Anmeldenummer: 24178291.1
(22) Anmeldetag: 27.05.2024
(51) Int. Cl.: B64C 1/14, B60J 1/00, B64F 5/10

(54) **VERFAHREN ZUM VERBINDEN EINES FENSTERRAHMENS MIT EINER RUMPFHAUT EINES LUFTFAHRZEUGS AUS EINEM FASERVERBUNDWERKSTOFF**

(30) Priorität: 01.06.2023 DE 102023114402
(71) Anmelder: Premium AEROTEC GmbH, 86179 Augsburg (DE)
(72) Erfinder: Scholler, Jochen, 86179 Augsburg (DE); Vrijbergen, Michiel, 86179 Augsburg (DE)
(74) Vertreter: LKGLOBAL Lorenz & Kopf Patentanwalt Attorney at Law PartG mbB

(57) **Zusammenfassung**

Es wird ein Verfahren zum Verbinden eines Fensterrahmes (6) mit einer Rumpfhaut (2) eines Luftfahrzeugs aus einem Faserverbundwerkstoff vorgeschlagen, das Verfahren aufweisend Bereitstellen des Fensterrahmens, Anfertigen einer Fensteröffnung in der Rumpfhaut, Anordnen einer aushärtbaren Verbindungsschicht (8) um die Fensteröffnung (4), Aufpressen des Fensterrahmens auf die Verbindungsschicht, Aushärten des Verbundes aus Rumpfhaut, Verbindungsschicht und Fensteröffnung.

## Beschreibung

### Technisches Gebiet

Die Erfindung betrifft ein Verfahren zum Verbinden eines Fensterrahmens mit einer Rumpfhaut eines Luftfahrzeugs aus einem Faserverbundwerkstoff.

### Technischer Hintergrund

Fahrzeuge für den Transport von Passagieren besitzen üblicherweise einen Rumpf mit einer darin ausgebildeten Passagierkabine, wobei der Rumpf üblicherweise Fenster aufweist, durch die in der Passagierkabine befindliche Passagiere nach außen blicken können. Zum Bereitstellen von Fenstern sind entsprechende Fensteröffnungen notwendig, die üblicherweise an einer Innenseite des Rumpfes mit einem Fensterrahmen versteift werden, in denen die Fenster angeordnet werden. Zum Verbinden der Rahmen mit dem Rumpf sind Nietverbindungen weit verbreitet. Zur Realisierung dieser werden der Fensterrahmen und ein Randbereich um die Fensteröffnung herum mit Nietbohrungen versehen, durch die Nietverbindungen zwischen den beiden Elementen hergestellt werden. Zwischen den Fensterrahmen und der Rumpfhaut sind weiterhin entsprechende Dichtmittel vorgesehen. Die Integration von Fensterrahmen kann auf diese Weise sowohl bei Aluminiumrümpfen, als auch bei Rümpfen aus Faserverbundwerkstoffen hergestellt werden.

Diese Art der Verbindung ist zeit- und arbeitsintensiv. Da die Nietverbindungen um eine Fensteröffnung diskret sind, erfolgt eine Verbindung und damit eine Lastübertragung zwischen den Fensterrahmen und der Rumpfhaut lediglich punktuell. Der Fensterrahmen und der Randbereich um die Fensteröffnung herum sind daher üblicherweise ausreichend groß dimensioniert und steif, um über diese punktuelle Verbindung eine ausreichende Festigkeit gewährleisten zu können.

### Beschreibung

Es ist eine Aufgabe der Erfindung, ein Verfahren zum Verbinden eines Fensterrahmens mit einer Rumpfhaut eines Luftfahrzeugs vorzuschlagen, welches eine ausreichend belastbare Verbindung ermöglicht, jedoch mit geringerem Aufwand.

Die Aufgabe wird durch ein Verfahren mit den Merkmalen des unabhängigen Anspruchs 1 gelöst. Vorteilhafte Ausführungsformen und Weiterbildungen der Erfindung sind den Unteransprüchen und der nachfolgenden Beschreibung zu entnehmen.

Es wird ein Verfahren zum Verbinden eines Fensterrahmes mit einer Rumpfhaut eines Luftfahrzeugs aus einem Faserverbundwerkstoff vorgeschlagen, das Verfahren aufweisend Bereitstellen des Fensterrahmens, Anfertigen einer Fensteröffnung in der Rumpfhaut, Anordnen einer aushärtbaren Verbindungsschicht um die Fensteröffnung, Aufpressen des Fensterrahmens auf die Verbindungsschicht, Aushärten des Verbundes aus Rumpfhaut, Verbindungsschicht und Fensteröffnung.

Der Kerngedanke der Erfindung liegt darin, einen bevorzugt bereits ausgehärteten Fensterrahmen aus einem Faserverbundwerkstoff bereitzustellen, der über eine aushärtbare Verbindungsschicht mit der Rumpfhaut verbunden wird. Der Verbund aus Rumpfhaut, Verbindungsschicht und Fensterrahmen wird gemeinsam einem Aushärtungsprozess unterworfen, sodass ein integrales Bauteil resultiert, in den der Fensterrahmen integriert ist. Erfindungsgemäß wird folglich die üblicherweise punktuelle Verbindung zwischen dem Fensterrahmen und der Rumpfhaut durch eine durchgehende, kontinuierliche Verbindung ersetzt. Die sonst notwendigen Bearbeitungsschritte zum Herstellen der Verbindungsbohrungen, das Entgraten und Säubern der Bohrungen, das Einbringen des Dichtmittels und schließlich das Einbringen der Verbindungsniete entfallen. Die verbesserte Verbindung ermöglicht ein verbessertes Verformungsverhalten des Verbundes aus Rumpfhaut und Fensterrahmen, was schließlich dazu führt, dass der Fensterrahmen einen vereinfachten Aufbau und/oder eine vereinfachte Faserausrichtung und/oder kürzere Faserlängen aufweisen kann.

Das Bereitstellen des Fensterrahmens kann das Anordnen mehrerer Lagen eines Faserverbundwerkstoffs aufweisen, die ein Matrixmaterial und Verstärkungsfasern aufweisen. Hierbei können bereits vorimprägnierte Gewebe oder Gelege eingesetzt werden, die zugeschnitten, mit gewünschten Faserverläufen aufeinandergelegt und unter Einwirkung von Wärme und Druck miteinander verbunden werden. Alternativ dazu könnte es sich auch anbieten, einzelne Fasergewebe oder Gelege in zugeschnittener Form abzulegen und durch ein entsprechendes Infusionsverfahren mit dem Matrixmaterial zu versehen um anschließend eine Aushärtung durchzuführen. Es können Endlosfasern und/oder kürzere Fasern bzw. Kurzfasern Verwendung finden.

Die Fensteröffnung in der Rumpfhaut kann mit einem geeigneten Materialabtragverfahren hergestellt werden, etwa durch Fräsen, Ultraschall-, Laser-, Wasserstrahlschneiden oder ähnliches. Die Rumpfhaut des Luftfahrzeugs kann hierbei bereits ausgehärtet sein, vorgehärtet oder noch nicht ausgehärtet sein.

Die aushärtbare Verbindungsschicht könnte ein Matrixmaterial als aktive Komponente aufweisen, das mit dem Matrixmaterial der Rumpfhaut und/oder des Fensterrahmens kompatibel ist. Es könnte lediglich auf eine Randfläche um die Fensteröffnung herum und/oder auf eine zu der Rumpfhaut weisende Fläche des Fensterrahmens aufgetragen werden. Dieser Vorgang kann durch Streichen, Rakeln, Sprühen, Rolle oder ähnliches erfolgen. Alternativ dazu könnte sie auch als zumindest teilweise formstabile Schicht auf die entsprechende Fläche aufgelegt werden. Letztere könnte beispielsweise einen Träger aus einem netzartigen, durchlässigen oder vollflächigen, undurchlässigen Material aufweisen, das mit dem Matrixmaterial versehen ist.

Der auf die Rumpfhaut aufgepresste Fensterrahmen schließt dadurch mit der Rumpfhaut die Verbindungsschicht ein. Das Aushärten des Verbundes aus Rumpfhaut, Verbindungsschicht und Fensteröffnung kann durch übliche Verfahren erreicht werden, die üblicherweise die Anwendung von Druck und Wärme umfassen. Dies kann ein Autoklav-basiertes Verfahren aufweisen. Anschließend ist der Fensterrahmen ein fest mit der Rumpfhaut verbundenes, integrales Bauteil.

An dieser Stelle sei erwähnt, dass das Matrixmaterial ein wärmehärtbares Harz sein könnte. Alternativ dazu könnte das Matrixmaterial auch ein Thermoplast sein, sodass durch Einwirkung von Wärme und gegebenenfalls Druck ein von Lufteinschlüssen freier Verbund des Matrixmaterials mit Verstärkungsfasern resultiert, der über die Verbindungsschicht mit dem Fensterrahmen verbunden ist.

In einer vorteilhaften Ausführungsform ist der Fensterrahmen vor dem Aufpressen ausgehärtet. Der Fensterrahmen kann durch ein von der Rumpfhaut unabhängiges Verfahren hergestellt und/oder als Zukaufteil beschafft werden. Das Fertigungsverfahren für die Herstellung des Fensterrahmens kann sich dabei durchaus von dem der Rumpfhaut unterscheiden, etwa um auch komplexere Faserverläufe zu realisieren. Es empfiehlt sich, eine mit der Rumpfhaut zu verbindende Fügefläche zu realisieren, die bündig auf die Verbindungsschicht aufpressbar ist. Das in dem Fensterrahmen verwendete Matrixmaterial ist bevorzugt mit der Verbindungsschicht kompatibel oder entspricht einem in der Verbindungsschicht vorgesehenen Matrixmaterial.

In einer vorteilhaften Ausführungsform weist das Verfahren ferner ein Anbringen einer Vakuumfolie auf die Rumpfhaut und den Fensterrahmen, und ein Evakuieren eines von der Vakuumfolie überdeckten Bereichs vor dem Aushärten des Verbundes auf. Durch das Evakuieren wird eine Kraft auf den Verbund aus Fensterrahmen, Verbindungsschicht und Rumpfhaut ausgeübt, sodass hierdurch das Aufpressen erfolgen kann. Es kann zusätzlich ein Aufpresskörper zwischen die Vakuumfolie und den Fensterrahmen angeordnet werden, der die Aufpresskraft steuert, lokal verstärkt und/oder umlenkt. Die Vakuumfolie kann zudem auch für eine Matrixinfusion verwendet werden, wenn zumindest ein Teil der Rumpfhaut durch ein Vakuuminfusionsverfahren herzustellen ist. Hierbei sind Infusionsöffnungen vorgesehen, durch die ein entsprechendes Matrixmaterial eingeleitet wird.

In einer vorteilhaften Ausführungsform ist die Verbindungsschicht auf einem Trägermaterial angeordnet und kann flächig auf den Fensterrahmen bzw. die Rumpfhaut angehaftet werden. Die Verbindungsschicht ist damit als eine Art Klebefilm oder Klebefolie realisiert, die einen aushärtbaren, insbesondere wärmehärtbaren Klebstoff in Form des Matrixmaterials aufweist. Die hierdurch hergestellte Verbindung zwischen dem Fensterrahmen und der Rumpfhaut ist damit dauerhaft. Das Trägermaterial kann Polyester umfassen.

In einer vorteilhaften Ausführungsform ist die Rumpfhaut und/oder der Fensterrahmen vor dem Aushärten des Verbundes noch nicht vollständig ausgehärtet. Die Aushärtung der Verbindungsschicht wird bei Ausführung des erfindungsgemäßen Verfahrens zeitgleich mit der vollständigen Aushärtung der Rumpfhaut durchgeführt, d.h. die Rumpfhaut und der Fensterrahmen werden gemeinsam ausgehärtet ("co-curing" bzw. "co-bonding").

In einer vorteilhaften Ausführungsform wird das Anfertigen der Fensteröffnung mittels eines Ultraschallverfahrens durchgeführt. Dies kann insbesondere als Ultraschall-Klingenschnitt erfolgen, bei dem eine präzise Schnittführung mit sauberen Kanten resultiert. Dieses Schneideverfahren eignet sich besonders für das Schneiden von Prepregs oder einer anderen Anordnung von Fasern und Matrixmaterial, bei dem eine Aushärtung noch nicht erfolgt ist.

In einer vorteilhaften Ausführungsform wird der Fensterrahmen vollflächig mit der Rumpfhaut verbunden. Der Fensterrahmen weist eine Auflagefläche auf, die vollständig in einen bündigen, stoffschlüssigen Kontakt mit der Rumpfhaut gebracht wird, sodass eine besonders feste, hochbelastbare Verbindung resultiert.

In einer vorteilhaften Ausführungsform werden keine mechanischen Verbindungselemente durch den Fensterrahmen und die Rumpfhaut eingebracht. Durch die stoffschlüssige Verbindung entfällt das Anbringen punktueller Verbindungselemente, was das mechanische Verformungsverhalten verbessert.

In einer vorteilhaften Ausführungsform erfolgt das Aushärten durch ein Autoklav-Verfahren.

In einer vorteilhaften Ausführungsform ist ein Abreißgewebe an den noch nicht vollständig ausgehärteten Fensterrahmen oder die noch nicht vollständig ausgehärtete Rumpfhaut angebracht ist, die vor dem Aufpressen entfernt wird. Die nach dem Abreißen vorliegende Oberfläche weist reproduzierbare Eigenschaften auf und verbessert die Anbindung an die aushärtbare Verbindungsschicht.

Als Vorteil ergibt sich zum Beispiel, dass die Konstruktion mit geringerem Gewicht leichter ausgeführt werden kann. Der über eine Verbindungsschicht angebundene Fensterrahmen stellt bessere Randbedingungen zur Verbindung mit der (Außen-) Haut des Luftfahrzeugs zur Verfügung. Der Beginn des Beulens tritt bei einem höheren Belastungslevel ein. Die Konstruktion kann daher leichter ausgeführt werden.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1a und 1b: zeigen schematisch das Verbinden eines Fensterrahmens mit einer Rumpfhaut mit (Fig. 1a) und ohne (Fig. 1b) ein Trägermaterial.
- Fig. 2: zeigt ein schematisches Diagramm zur Aushärtung des Verbundes.
- Fig. 3: zeigt schematisch eine zusätzliche Befestigung des Fensterrahmens.

### Detaillierte Beschreibung von Ausführungsbeispielen

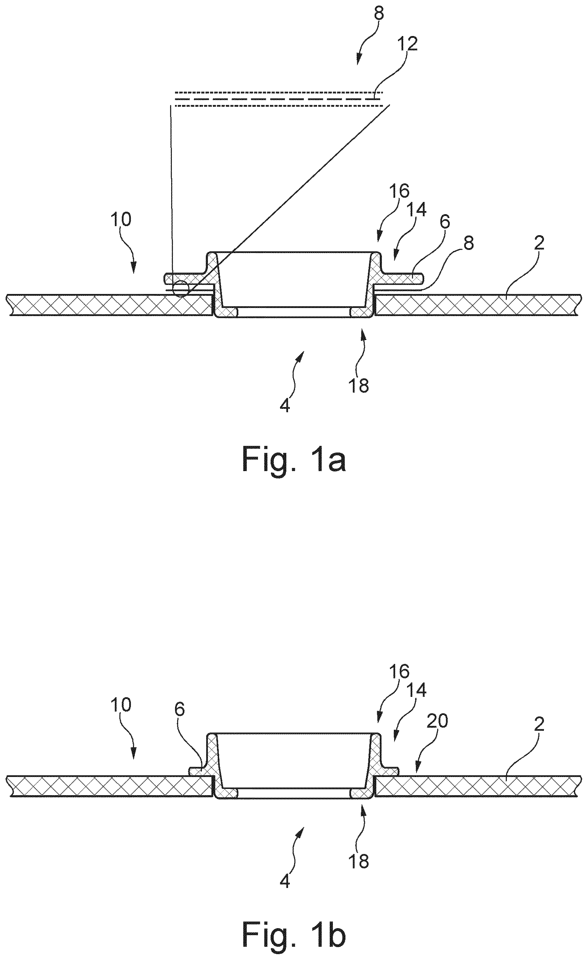

Fig. 1 zeigt eine Rumpfhaut 2 mit einer darin angeordneten Fensteröffnung 4. Ein bereits ausgehärteter Fensterrahmen 6 aus einem Faserverbundwerkstoff wird bereitgestellt und in die Fensteröffnung 4 eingebracht. Eine Verbindung zwischen dem Fensterrahmen 6 und der Rumpfhaut 2 erfolgt mittels einer aushärtbaren Verbindungsschicht 8, die die Fensteröffnung 4 an einer Innenseite 10 der Rumpfhaut 2 umgibt und bündig mit der Rumpfhaut 2 und dem Fensterrahmen 6 in Kontakt steht. Der Verbund aus Rumpfhaut 2, Verbindungsschicht 8 und Fensterrahmen 6 wird gemeinsam einem Aushärtungsprozess unterworfen, sodass ein integrales Bauteil resultiert, in den der Fensterrahmen 6 integriert ist. Die Verbindung zwischen den Komponenten ist durchgehend bzw. kontinuierlich, was das Verformungsverhalten des Verbundes verbessert und einen vereinfachten Aufbau und/oder eine vereinfachte Faserausrichtung und/oder kürzere Faserlängen in dem Fensterrahmen 6 ermöglicht.

Die in Fig. 1a gezeigte Variante der Verbindungsschicht 8 ist auf einem Trägermaterial 12 angeordnet, das beispielsweise eine oder mehrere, Polyester aufweisende Materiallagen umfasst. Beidseitig auf dem Trägermaterial 12 kann die Verbindungsschicht angeordnet sein. Vor dem Anbringen des Fensterrahmens 6 kann das Trägermaterial 12 zugeschnitten und wie ein Aufkleber auf die Rumpfhaut 2 aufgeklebt werden, um anschließend den Fensterrahmen 6 aufzupressen.

In der gezeigten exemplarischen Ausführungsform weist der Fensterrahmen 6 einen äußeren Flansch 14 auf, der auf einen Randbereich der Rumpfhaut 2 aufgelegt ist, welcher die Fensteröffnung 4 umgibt. Der äußere Flansch erstreckt sich radial nach außen. Innenseitig ist ein innerer umlaufender Steg 16 vorgesehen, der sich von dem äußeren Flansch axial nach innen, d.h. von der Fensteröffnung 4 nach innen (in der Zeichnungsebene nach oben), erstreckt. In entgegengesetzter Richtung ist ein äußerer umlaufender Steg 18 angeordnet, der axial nach außen erstreckt und weitgehend bündig mit der Rumpfhaut 2 abschließt.

Fig. 1b zeigt denselben Fensterrahmen 6, der eine Verbindungsschicht 20 aufweist, die ohne das Trägermaterial 12 an den Fensterrahmen 6 und/oder die Rumpfhaut 2 angebracht ist. Dies ist lediglich schematisch dargestellt und führt praktisch nicht zu einer veränderten Dicke des Aufbaus.

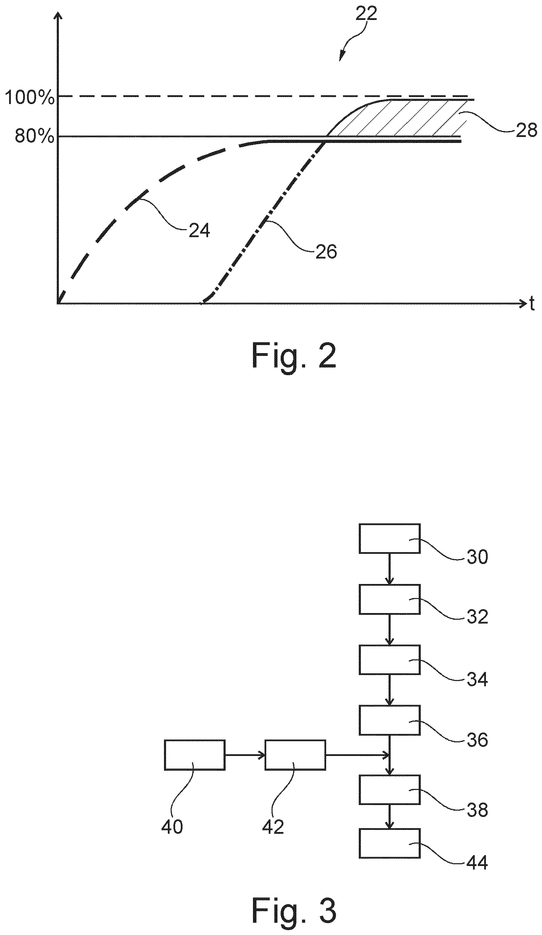

Fig. 2 zeigt ein schematisches Aushärtungsdiagramm 22, mit dem die Aushärtung des Verbundes dargestellt wird. Die Abszisse repräsentiert die Aushärtezeit, während die Ordinate den Aushärtegrad in % zeigt. In Fig. 2 sind zwei verschiedene Optionen offenbart. In einer ersten Option wird der Fensterrahmen 6 und/oder die Rumpfhaut 2 vorgehärtet, beispielsweise zu 80% ausgehärtet, wie durch die Linie 24 angedeutet. Dies kann durch Aufbringen eines Drucks und eine entsprechende Erwärmung erreicht werden, zum Beispiel in einem Autoklav. Anschließend können der Fensterrahmen 6, die Verbindungsschicht 8 oder 20 und die Rumpfhaut 2 miteinander in Kontakt gebracht und gemeinsam ausgehärtet werden, beispielsweise durch weiteres Erwärmen unter Druck. Durch das gemeinsame Aushärten kann durch die aushärtbare Verbindungsschicht 8 oder 20 ein integrales Bauteil hergestellt werden.

Es ist indes auch möglich, einen vollständig ausgehärteten Fensterrahmen 6 zu verwenden, der mit einer noch nicht ausgehärteten Verbindungsschicht 8 oder 20 durch Aushärten dieser mit der Rumpfhaut 2 verbunden wird. Das Aushärten erfolgt, wie durch die Linie 26 dargestellt, bis zu einem Aushärtegrad von 100%. Die hierfür notwendige Energie wird durch eine Schnittfläche 28 zwischen den Linien 24 und 26 repräsentiert.

Fig. 3 zeigt weiterhin ein Verfahren zum Verbinden eines Fensterrahmes 6 mit einer Rumpfhaut 2 eines Luftfahrzeugs aus einem Faserverbundwerkstoff, wobei das Verfahren das Bereitstellen 30 des Fensterrahmens 6, das Anfertigen 32 einer Fensteröffnung 4 in der Rumpfhaut 2, das Anordnen 34 einer aushärtbaren Verbindungsschicht 8 oder 20 um die Fensteröffnung 4, das Aufpressen 36 des Fensterrahmens 6 auf die Verbindungsschicht 8 oder 20, das Aushärten 38 des Verbundes aus Rumpfhaut 2, Verbindungsschicht 8 oder 20 und Fensteröffnung 4. Das Anfertigen 32 der Fensteröffnung 4 könnte mittels geführtem Schneiden der Rumpfhaut 2 mittels eines Ultraschallschneidwerkzeugs durchgeführt werden. Der Fensterrahmen 6 kann dabei vor dem Aufpressen 36 ausgehärtet oder noch nicht vollständig ausgehärtet sein. Auch die Rumpfhaut 2 könnte vor dem Aushärten 38 des Verbundes ausgehärtet oder noch nicht vollständig ausgehärtet sein. Die Verbindungsschicht 8 könnte auf einem Trägermaterial 12 angeordnet sein, sodass das Anordnen 34 auch ein Anhaften umfassen kann.

Vor dem Aushärten 38 kann eine Vakuumfolie auf die Rumpfhaut 2 und den Fensterrahmen 6 aufgebracht werden 40, anschließend kann ein von der Vakuumfolie überdeckter Bereich evakuiert werden 42. Bevorzugt wird der Fensterrahmen 6 durch das Aufpressen 36 und Aushärten 38 vollflächig mit der Rumpfhaut 2 verbunden.

Weiterhin ist vorstellbar, zusätzlich zu der Verbindung durch die Verbindungsschicht 8 bzw. 20 mechanische Verbindungselemente durch den Fensterrahmen 6 und die anschließende Rumpfhaut 2 einzubringen 44. Diese könnten Niete umfassen, die bündig mit der Rumpfhaut 2 abschließen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 2: Rumpfhaut
- 4: Fensteröffnung
- 6: Fensterrahmen
- 8: aushärtbare Verbindungsschicht
- 10: Innenseite
- 12: Trägermaterial
- 14: äußerer Flansch
- 16: innerer umlaufender Steg
- 18: äußerer umlaufender Steg
- 20: Verbindungsschicht
- 22: Aushärtungsdiagramm
- 24: 80%-Linie
- 26: 100%-Linie
- 28: Schnittfläche
- 30: Bereitstellen des Fensterrahmens
- 32: Anfertigen einer Fensteröffnung
- 34: Anordnen einer aushärtbaren Verbindungsschicht
- 36: Aufpressen des Fensterrahmens
- 38: Aushärten des Verbundes
- 40: Anbringen einer Vakuumfolie
- 42: Evakuieren überdeckter Bereich
- 44: Einbringen mechanischer Verbindungselemente

## Patentansprüche

1. Verfahren zum Verbinden eines Fensterrahmes (6) mit einer Rumpfhaut (2) eines Luftfahrzeugs aus einem Faserverbundwerkstoff, aufweisend:
Bereitstellen (30) des Fensterrahmens (6),
Anfertigen (32) einer Fensteröffnung (4) in der Rumpfhaut (2),
Anordnen (34) einer aushärtbaren Verbindungsschicht (8, 20) um die Fensteröffnung (4),
Aufpressen (36) des Fensterrahmens (6) auf die Verbindungsschicht (8, 20),
Aushärten (38) des Verbundes aus Rumpfhaut (2), Verbindungsschicht (8, 20) und Fensteröffnung (4).

2. Verfahren nach Anspruch 1,
wobei der Fensterrahmen (6) vor dem Aufpressen (36) ausgehärtet ist.

3. Verfahren nach Anspruch 1 oder 2,
ferner aufweisend Anbringen (40) einer Vakuumfolie auf die Rumpfhaut (2) und den Fensterrahmen (6), und
Evakuieren (42) eines von der Vakuumfolie überdeckten Bereichs vor dem Aushärten (38) des Verbundes.

4. Verfahren nach einem der vorhergehenden Ansprüche,
wobei die Verbindungsschicht (8, 20) auf einem Trägermaterial (12) angeordnet ist und flächig auf den Fensterrahmen (6) bzw. die Rumpfhaut (2) angehaftet werden kann.

5. Verfahren nach einem der vorhergehenden Ansprüche,
wobei die Rumpfhaut (2) und/oder der Fensterrahmen (6) vor dem Aushärten (38) des Verbundes noch nicht vollständig ausgehärtet ist.

6. Verfahren nach einem der vorhergehenden Ansprüche,
wobei das Anfertigen (32) der Fensteröffnung (4) mittels eines Ultraschallverfahrens durchgeführt wird.

7. Verfahren nach einem der vorhergehenden Ansprüche,
wobei der Fensterrahmen (6) vollflächig mit der Rumpfhaut (2) verbunden wird.

8. Verfahren nach einem der vorhergehenden Ansprüche,
wobei keine mechanischen Verbindungselemente durch den Fensterrahmen (6) und die anschließende Rumpfhaut (2) eingebracht werden.

9. Verfahren nach einem der vorhergehenden Ansprüche,
wobei das Aushärten (38) durch ein Autoklav-Verfahren erfolgt.

10. Verfahren nach Anspruch 5,
wobei ein Abreißgewebe an den noch nicht vollständig ausgehärteten Fensterrahmen (6) oder die noch nicht vollständig ausgehärtete Rumpfhaut (2) angebracht ist, die vor dem Aufpressen (36) entfernt wird.

11. Luftfahrzeug, aufweisend einen Rumpf, der zumindest bereichsweise mit einem Verfahren nach einem der vorhergehenden Ansprüche hergestellt ist.
